# EUROPÄISCHE PATENTSCHRIFT

(11) **EP 3 948 470 B1**
(45) Veröffentlichungstag und Bekanntmachung des Hinweises auf die Patenterteilung: **28.09.2022**
(21) Anmeldenummer: 20722447.8
(22) Anmeldetag: 02.04.2020
(51) Int. Cl.: G02B 27/32, G02B 5/00, G05D 1/02

(54) **OPTISCHE POSITIONSMARKIERUNG, ROBOTER MIT SOLCHER MARKIERUNG UND STEUERUNGSSYSTEM FÜR SOLCHEN ROBOTER**
OPTICAL POSITION MARKER, ROBOT WITH SAID MARKER AND SYSTEM FOR CONTROLLING SAID ROBOT
CIBLE OPTIQUE DE POSITIONNEMENT, ROBOT AVEC LADITE CIBLE ET SYSTEME DE COMMANDE D'UN TEL ROBOT

(30) Priorität: 02.04.2019 DE 102019108643
(43) Veröffentlichungstag der Anmeldung: 09.02.2022
(73) Patentinhaber: Zauberzeug GmbH, 48329 Havixbeck (DE)
(72) Erfinder: TRAPPE, Rodja, 48155 Münster (DE); SCHINDLER, Falko, 48145 Münster (DE)
(74) Vertreter: RCD Patent Giesen, Schmelcher & Griebel Patentwanwälte PartG mbB
(86) Internationale Anmeldenummer: PCT/DE2020/100275
(87) Internationale Veröffentlichungsnummer: WO 2020/200369

(56) Entgegenhaltungen:
- WO-A1-2008/143614
- WO-A1-2010/063916
- WO-A1-2018/193806
- WO-A2-2008/013648
- US-A1- 2007 167 708

## Beschreibung

Die Erfindung betrifft ein Roboterfahrzeug mit einem Positionsmarker zur optischen Erfassung durch einen optischen Aufnahmesensor, einen Positionsmarker sowie eine Anordnung zur Steuerung eines Roboterfahrzeugs mit einem Positionsmarker.

### Stand der Technik

Die WO002018193806A1 beschreibt eine mehrschichtige Markierungseinheit in Form eines gestapelten Körpers, der eine obere Grundplatte und eine untere Grundplatte umfasst.

Die WO002008143614A1 beschreibt ein Verfahren und eine Vorrichtung zur Ausrichtung von Fahrzeugrädern, bei welchem dreidimensionale Marker auf die Räder aufgebracht werden.

Die US020070167708A1 beschreibt einen Marker für ein Navigationssystem mit einer reflektierenden Oberfläche und einem absorbierenden Objekt, welches in einem definierten Abstand zu der reflektierenden Oberfläche angeordnet ist, sowie ein Verfahren zum Detektieren einer Position eines solchen Markers.

Die WO002008013648A2 beschreibt eine Regelung mittels eines kamerabasierten Bewegungserfassungssystems. Dabei kann ein steuerbares Gerät kann mit passiven retroreflektierenden Markern ausgestattet sein.

Die DE 10 2014 000 375 A1 beschreibt eine Vorrichtung und ein Verfahren mit einem Transportfahrzeug mit einem 2-dimensionalen Positionsmarker. Zur

Verbesserung der Detektionsergebnisse erfolgt eine individuelle Beleuchtung sowie eine Abschirmung der Kamera gegen Streulicht mittel seines Zylinders.

Eine derartige Vorrichtung ist für die Anwendung im Freien bei stark wechselnden Lichtverhältnissen und großem Abstand zwischen Kamera und Roboter nur bedingt geeignet.

Die Anforderungen an einen Marker für ein zu steuerndes Roboterfahrzeug sind im Freien ungleich höher und erfordern eine gute Detektierbarkeit des Markers sowohl bei Dämmerlicht oder in vollkommener Dunkelheit als auch bei starker Lichteinstrahlung durch Sonnenlicht, bei einer Erfassung des Markers sowohl im flachen Winkel aus derselben Richtung, in der die Kamera zum Objekt steht, als auch in einem steilen Winkel oder in einem im flachen Winkel entgegen der Kamera.

### Offenbarung der Erfindung

Aufgabe der vorliegenden Erfindung ist es, eine gegenüber dem Stand der Technik verbesserte Lösung anzugeben.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Erfindungsgemäß vorgesehen ist ein Positionsmarker zur optischen Erfassung durch einen optischen Aufnahmesensor, insbesondere einer Kamera, welcher eine zweidimensionale Markerwirkfläche mit Teilflächen unterschiedlicher optischer Eigenschaften aufweist, wobei die Markerwirkfläche eine oder mehrere reflektierende oder lichtabgebende Teilflächen und eine oder mehrere im Wesentlichen nichtreflektierende oder lichtabsorbierende Teilflächen aufweist, wobei der Positionsmarker eine dreidimensionale Erstreckung aufweist und eine Teilfläche in Form einer Ausnehmung ausgeführt ist und wobei die Markerwirkfläche einen unter oder hinter der Markerwirkfläche angeordneten Hohlraum abschließt, welcher durch die Ausnehmung einsehbar ist.

Als Markerwirkfläche wird dabei eine annähernd zweidimensionale Oberfläche des Markers bezeichnet, die stark unterschiedlich reflektierende und/oder lichtemittierende Teilflächen aufweist und die aufgrund dieser unterschiedlichen Emissions- beziehungsweise Reflexionseigenschaften gut zur Erfassung und Wiedererkennung des Positionsmarkers, zum Beispiel zur Positionsbestimmung eines Roboterfahrzeug, geeignet ist. Die verschiedenen Teilflächen weisen dazu einen möglichst hohen Kontrast und eine möglichst gut wiedererkennbare Form, zum Beispiel in Form eines Symbols, oder eines Datamatrixcodes, etc. auf.

Insbesondere zur Positions- und Orientierungsbestimmung eines Roterfahrzeugs sind die jeweiligen Kontrastflächen möglichst groß, beispielsweise zumindest zu 0,5m² bis 2,0m², ausgeführt, damit die Oberfläche bzw. die Form des Markers auch in großer Entfernung noch erkennbar ist.

Dabei ist unter einer annähernd zweidimensionalen Oberfläche eine Oberfläche zu verstehen, welche in ihrem Gesamteindruck den Eindruck einer zweidimensionalen Fläche erweckt, wie dies beispielsweise bei einem Hochflor-Teppich, einem Rasen, einem Sieb oder einer Lochraster-Leiterplatte der Fall ist.

Weiterhin ist unter einer Ausnehmung eine (Material-) Ausnehmung im Sinne einer Aussparung, Öffnung oder einer räumlichen Unterbrechung in einem Trägermaterial der Markerwirkfläche zu verstehen. Vorteilhaft kann eine Ausnehmung beispielsweise in Form einer Aussparung gegeben sein, in welche eine Leuchteinheit einpassbar ist.

Eine Ausnehmung im Sinne einer Öffnung bietet den Vorteil, dass sie unabhängig von einer Beleuchtungsintensität selbst keinerlei Reflektionen verursacht. Allerdings ist es praktisch unvermeidbar, dass durch die Öffnung fallendes Licht an hinter der Öffnung befindlichen Objekten reflektiert wird, so dass zumindest ein gewisser Streuanteil des einfallenden Lichtes durch die Öffnung zurückstreut.

Dabei wird ein diffus gestreuter Anteil des Lichtes, welcher durch die Öffnung zurück reflektiert wird, umso geringer sein, je weiter eine Reflexionsfläche von der Öffnung entfernt ist. Da ein Lichteinfall zumeist nicht aus dem Zenit bzw. einer Vertikalen, sondern unter einem Höhenwinkel < 90 Grad erfolgt, besteht die Möglichkeit, dass einfallendes Licht von einer inneren Seitenwand des Hohlraums reflektiert wird. Um dieser Möglichkeit entgegenzuwirken, weist der Positionsmarker unterhalb der Ausnehmung einen Hohlraum auf.

Der Positionsmarker kann unterhalb der Ausnehmung einen Hohlraum aufweisen, dessen seitliche Erstreckung mit zunehmendem Abstand zur Ausnehmung, beispielsweise einem auf dem Kopf stehenden Trichter entsprechend, zunimmt.

Alternativ kann der Abstand von Innenflächen zur Ausnehmung möglichst groß gewählt werden, um den Anteil der durch die Ausnehmung von einer Kamera erfassbaren Reflektionen möglichst gering zu gestalten. Vorteilhaft entspricht der Abstand der Innenflächen des Hohlraums zu der Ausnehmung zumindest 65%, insbesondere zumindest 100%, der Breite der Ausnehmung.

Unterhalb einer Öffnung in der Markerwirkfläche und dazu beabstandet kann der Positionsmarker zum Beispiel eine Platte aufweisen, um den Marker optisch zu verschließen. Vorzugsweise ist diese Platte und/oder zumindest ein Teil der Innenfläche des durch die Ausnehmung einsehbaren Hohlraums lichtabsorbierend ausgestaltet.

Vorzugsweise ist die Innenfläche des Hohlraums beispielsweise als (i) schwarze Fläche, oder als (ii) textile Fläche ausgestaltet, oder mit (iii) schwarzen Pyramiden, Kegeln oder Stacheln versehen, zum Beispiel mit einer Höhe von 1-5 cm oder einer Mantellinien- oder Kantenlänge bzw. Gratlänge von 1-2 cm. Dabei kann die Innenfläche des Hohlraums auch eine Kombination aus den Merkmalen (i), (ii), und (iii) aufweisen.

In einer vorteilhaften Ausgestaltung ist der Hohlraum mit Ausnahme der Ausnehmung in der Markerwirkfläche im Wesentlichen geschlossen ausgeführt. Um jedoch beispielsweise einen Ablauf von Regenwasser zu ermöglichen, kann der Hohlraum eine oder mehrere untere Öffnungen aufweisen.

Alternativ zu einem Freiraum in Form einer Öffnung kann eine Ausnehmung in der Markerwirkfläche auch eine beleuchtete Teilfläche aufweisen. Grundsätzlich bietet eine beleuchtete Teilfläche gegenüber einer reflektierenden Teilfläche den Vorteil, dass die von der Teilfläche emittierte und ggf. zusätzlich reflektierte Lichtmenge weniger unabhängig von den umgebenden Lichtverhältnissen ist und von daher einer geringeren Schwankungsbreite unterliegt.

In einer vorteilhaften Ausführung weist die Markerwirkfläche eine beleuchtete Teilfläche aus einem milchig-transparenten Material, z.B. einer Glas- oder Plexiglasscheibe auf, welche seitlich oder von unten von einer Lichtquelle beleuchtet werden kann. Durch eine derartige Ausführung kann eine in etwa homogen beleuchtete Teilfläche ausgeführt werden, welche zu allen Seiten die in etwa gleiche Lichtmenge abgibt.

Vorteilhaft kann die Markerwirkfläche eine oder mehrere beleuchtete Teilflächen aufweisen, deren Helligkeit adaptiv mittels eines Lichtsensor geregelt werden kann, damit in kompletter Dunkelheit die hellen Teilflächen nicht überstrahlen. Zwecks Regelung kann der Marker zum Beispiel dimmbare LEDs aufweisen.

Zur Optimierung der Größe des Positionsmarkers können helle, reflektierende oder lichtabgebende Teilflächen kleiner gewählt werden als dunkle, nichtreflektierende oder lichtabsorbierende Teilflächen, denn durch ein Überstrahlen der hellen Bereiche wirken diese auf einem optischen Sensorchip größer. In einer vorteilhaften Ausgestaltung ist die Summe von reflektierende oder lichtabgebende Teilflächen kleiner ausgeführt als die Summe von im Wesentlichen nichtreflektierende oder lichtabsorbierende Teilflächen.

Weiterhin kann der Marker richtungsgebend ausgeführt sein. Dabei weist die zweidimensionale Markerwirkfläche zumindest eine nicht punktsymmetrische Form auf, so dass eine Orientierung des Markers im Raum erkennbar ist. Befindet sich der Positionsmarker beispielsweise auf einer ebenen Fläche, so ist bei bekannter Kameraneigung der Drehwinkel um die Flächennormale erfassbar. Je nach Ausführung des Markes kann zusätzlich aufgrund unterschiedlicher Streckung oder Dehnung des Markers eine Neigung der Fläche erfassbar sein.

Erfindungsgemäß vorgesehen ist weiterhin ein Roboterfahrzeug, welches auf einer Fläche beweglich ist, zum Empfang von Fernsteuerdaten, insbesondere Positionsdaten, von einem stationär angeordneten Kamerasystem mit wenigstens einer Kamera eingerichtet ist, und einen vorbeschriebenen Positionsmarker zur Unterstützung einer Positionserfassung des Roboterfahrzeugs auf der Fläche aufweist. Dabei steht der Begriff eines Roboterfahrzeugs stellvertretend für mobile Roboter mit eigenem Antrieb zur freien Positionsveränderung.

Ferner ist erfindungsgemäß eine Anordnung aus einem Roboterfahrzeug und einem stationären Kamerasystem vorgesehen, wobei das Roboterfahrzeug zum Empfang von Fernsteuerdaten, insbesondere Positionsdaten, eingerichtet und auf einer Fläche beweglich ist, das stationäre Kamerasystem wenigstens eine Kamera aufweist, und wobei die Kamera in einer gegenüber dem Roboterfahrzeug erhöhten Position angeordnet und eingerichtet ist, das Roboterfahrzeug auf der Fläche zu erfassen und dem Roboterfahrzeug zum Zweck einer Fernsteuerung, insbesondere zumindest zu einer Positionsbestimmung, Steuerungsdaten zu übermitteln, wobei das Roboterfahrzeug einen vorbeschriebenen Positionsmarker aufweist, mit Hilfe dessen eine Positionserfassung des Roboterfahrzeugs auf der Fläche erzielbar ist. Dabei kann sich eine Fernsteuerung auf eine unterstützende Übermittlung von Positionsdaten zwecks einer autonomen Steuerung beschränken.

In einer vorteilhaften Ausgestaltung der Anordnung ist der Abstand der Innenflächen eines unter der Markerwirkfläche befindlichen Hohlraums zu einer offenen Ausnehmung abhängig von einem Erfassungswinkel der Kamera, insbesondere dem innerhalb der Anordnung maximalen Erfassungswinkel, und/oder einem Einfallswinkel einer Lichtquelle, insbesondere dem innerhalb der Anordnung maximalen Einfallswinkel, ausgeführt.

Im Falle eines steilen, annähernd senkrechten Lichteinfalls wird innerhalb des Hohlraums im Wesentlichen eine Fläche beleuchtet, die annähernd lotrecht unter der Ausnehmung liegt. Wird die Ausnehmung in der Markerwirkfläche im Wesentlichen unter einem relativ flachen Winkel von der Kamera erfasst, ist die innerhalb des Hohlkörpers bzw. Hohlraums beleuchtete Fläche durch die Kamera vorteilhaft nicht erfassbar. Der Abstand der Innenfläche, insbesondere der Abstand einer als Absorptionsfläche bezeichneten Innenfläche, welche parallel und unterhalb der Markerwirkfläche angeordnet ist, zur Ausnehmung in der Markerwirkfläche kann umso geringer gewählt werden, je flacher der maximale Erfassungswinkel ist.

In einer vorteilhaften Ausgestaltung weist bei einem maximalen Erfassungswinkel ϕ der Abstand δ einen Wert größer oder gleich zu tan(ϕ) * D auf, wobei D dem Durchmesser der Ausnehmung entspricht. Dabei beschreibt der Abstand δ den Abstand der Absorptionsfläche zur Ausnehmung und der Erfassungswinkel ϕ den Winkel, unter dem die Kamera den Marker gegenüber der Horizontalen erfasst.

Entsprechend weist in einer weiteren vorteilhaften Ausgestaltung, bei welcher für den Fall eines flachen Lichteinfalls die Absorptionsfläche lotrecht unterhalb der Ausnehmung nicht beleuchtet wird, und wobei eine Kamera nahezu direkt über dem Marker angeordnet ist, der Abstand δ in Abhängigkeit vom maximalen Lichteinfallswinkel ψ wenigstens den Betrag von tan(ψ) * D auf.

In einer weiteren vorteilhaften Ausgestaltung ist eine Kamera derart positioniert, dass eine Erfassungsrichtung der Kamera, d.h. eine Richtung, in welcher sich ein von der Kamera zu erfassender Positionsmarker von der Kamera aus befindet, in etwa der Einfallsrichtung des Lichts entgegengesetzt ist. In einer vorteilhaften Ausgestaltung der Anordnung im Freien ist eine Kamera in Richtung Norden ausgerichtet.

### Zeichnungen

Nachfolgend wird die Erfindung unter Bezugnahme auf die anliegenden, schematischen Zeichnungen anhand bevorzugter Ausführungsformen näher erläutert.

Es zeigen
- Fig. 1: ein Ausführungsbeispiel eines ersten Positionsmarkers;
- Fig. 2: dasselbe Ausführungsbeispiel des ersten Positionsmarkers mit aufgeklappter Markerwirkfläche;
- Fig. 3: eine Ausführungsbeispiel einer Anordnung aus einem Roboterfahrzeug und einem stationären Kamerasystem vorgesehen, wobei das Roboterfahrzeug einen vorbeschriebenen Positionsmarker aufweist.

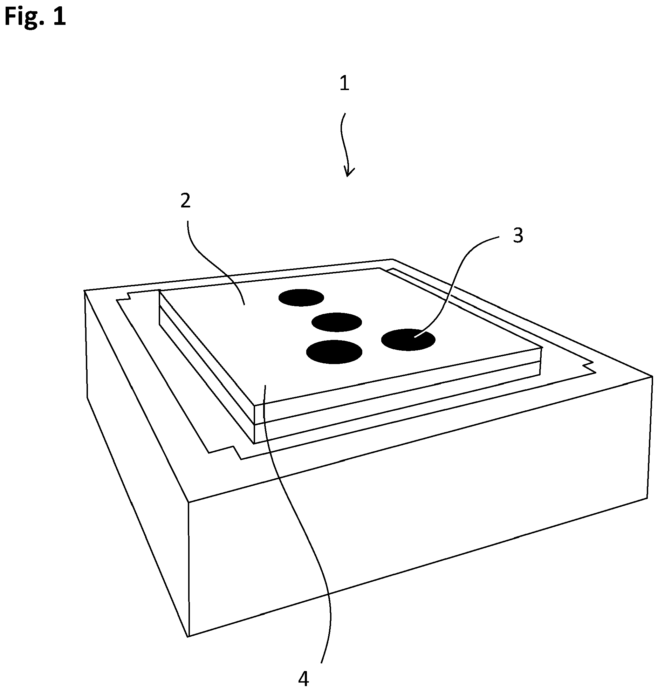

Fig. 1 zeigt ein Ausführungsbeispiel eines ersten Positionsmarkers 1.

Aus Fig. 1 ist ein Positionsmarker 1 zur optischen Erfassung durch einen optischen Aufnahmesensor ersichtlich welcher eine 2-dimensionale Markerwirkfläche 4 mit Teilflächen 2 unterschiedlicher optischer Eigenschaften aufweist. Die Markerwirkfläche 4 weist eine reflektierende Teilfläche 2 und eine im Wesentlichen nichtreflektierende Teilfläche 2 in Form einer Ausnehmung 3 auf.

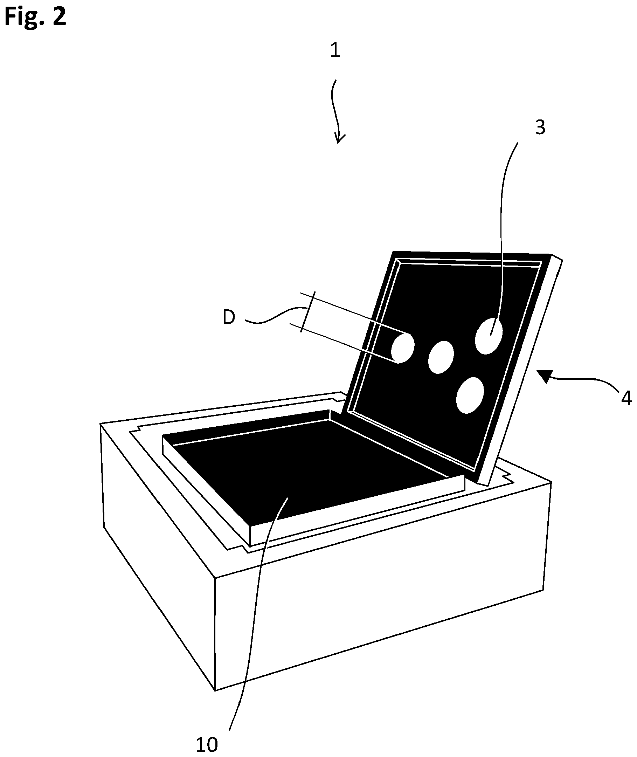

Wie in Kombination mit Fig 2 ersichtlich weist der Positionsmarker 1 eine 3-dimensionale Form auf, wobei die Markerwirkfläche 4 einen unter oder hinter der Markerwirkfläche 4 angeordneten Hohlraum 10 abschließt, welcher durch die Ausnehmung 3 einsehbar ist.

Der Raum hinter den Ausnehmungen 3 ist frei von Seitenwänden. Die Markerwirkfläche 4 verschließt eine Box, deren Grundfläche der Markerwirkfläche 4 entspricht. Die Box ist frei von inneren Strukturen, welche Reflexionen verursachen könnten. Die Flächen ihrer Innenseiten sind absorbierend ausgeführt. Die dem Innenraum der Box zugewandte Fläche der Markerwirkfläche 4 ist ebenfalls absorbierend ausgeführt.

In Fig. 2 ist die Markerwirkfläche 4 hochgeklappt dargestellt, so dass die lichtabsorbierende Innenfläche des Hohlraums 10 sichtbar ist. Die Innenfläche des Hohlraums 10 ist als schwarze Fläche ausgestaltet.

Die reflektierende Teilfläche 2 des ersten Ausführungsbeispiels ist als beleuchtete Teilfläche 2 in Form einer Plexiglasscheibe ausgeführt, welche von seitlich in die Plexiglasscheibe einstreuenden LEDs beleuchtet werden kann. Das Ausführungsbeispiel des ersten Positionsmarkers 1 weist mehrere Ausnehmungen 3 auf und ist richtungsgebend in Form eines stilisierten Pfeiles ausgeführt. Die mehreren Ausnehmungen 3 werden von einem gemeinsamen Hohlraum 10 abgeschlossen, die Ausnehmungen 3 weisen einen Durchmesser D auf und erlauben den Zugang zu einem gemeinsamen, hinter den Ausnehmungen 3 angeordneten Hohlraum 10. Der Positionsmarker 1 ist zur horizontalen Anordnung auf einem Roboterfahrzeug 5 ausgeführt.

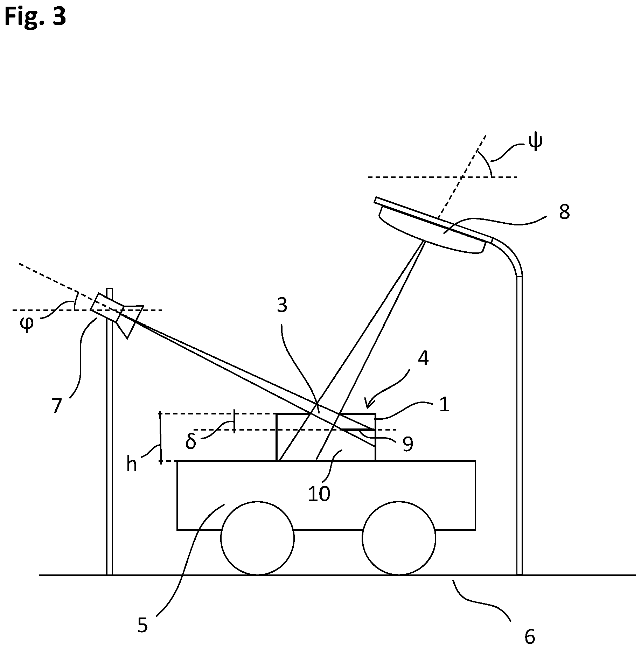

Fig 3 zeigt eine Anordnung aus einem Roboterfahrzeug 5 und einem stationären Kamerasystem, wobei das Roboterfahrzeug 5 zum Empfang von Fernsteuerdaten, insbesondere von Positionsdaten, eingerichtet und auf einer Fläche 6 beweglich ist. Das stationäre Kamerasystem weist wenigstens eine Kamera 7 auf und ist in einer gegenüber dem Roboterfahrzeug 5 erhöhten Position angeordnet und eingerichtet, das Roboterfahrzeug 5 auf der Fläche 6 zu erfassen und dem Roboterfahrzeug 5 zum Zweck einer Fernsteuerung Steuerungsdaten zu übermitteln. Das Roboterfahrzeug 5 weist einen Positionsmarker 1 auf, mit Hilfe dessen eine Positionserfassung des Roboterfahrzeugs 5 auf der Fläche 6 erzielbar ist.

Der Positionsmarker 1 weist eine Ausnehmung 3 mit einem Durchmesser D auf, durch welche die Kamera 7 das Innere eines Hohlraums 10 unterhalb der Markerwirkfläche 4 erfasst. In Abhängigkeit von einem Erfassungswinkel ϕ und einer Höhe h des Hohlraums 10 erfasst die Kamera 7 eine seitliche Innenfläche, eine untere Innenfläche, oder sowohl eine seitliche als auch eine untere Innenfläche des Hohlraums 10.

Dabei ist der Abstand δ der Innenflächen eines unter der Markerwirkfläche 4 befindlichen Hohlraums 10 in Abhängigkeit von dem maximalen Erfassungswinkel ϕ der Kamera 7 und/oder dem Einfallswinkel ψ einer Lichtquelle 8 ausgeführt, das Kriterium für einen minimalen Abstand δ der Innenflächen zur Markerwirkfläche 4 ist mit h > tan(ϕ) * D erfüllt.

Für den mittels einer Hilfslinie dargestellten Fall von δ = tan(ϕ) * D befindet sich die Absorptionsfläche 9 gerade außerhalb eines lotrecht unterhalb der Ausnehmung 3 gelegenen Bereichs. Zusätzlich ist die Erfassungsrichtung der Kamera 7 einer Einfallsrichtung des Lichts der Lichtquelle 8 entgegengerichtet.

## Patentansprüche

1. Positionsmarker (1) zur optischen Erfassung durch einen optischen Aufnahmesensor, insbesondere einer Kamera (7), welcher eine zweidimensionale Markerwirkfläche (4) mit Teilflächen (2) unterschiedlicher optischer Eigenschaften aufweist, wobei die Markerwirkfläche (4) eine oder mehrere reflektierende oder lichtabgebende Teilflächen (2) und eine oder mehrere im Wesentlichen nichtreflektierende oder lichtabsorbierende Teilflächen (2) aufweist,
der Positionsmarker (1) eine dreidimensionale Erstreckung aufweist und eine Teilfläche (2) in Form einer Ausnehmung (3) ausgeführt ist, **dadurch gekennzeichnet, dass** die Markerwirkfläche (4) einen unter oder hinter der Markerwirkfläche (4) angeordneten Hohlraum (10) abschließt, welcher durch die Ausnehmung (3) einsehbar ist.

2. Positionsmarker (1) nach Anspruch 1, **dadurch gekennzeichnet, dass** ein Abstand von Innenflächen des Hohlraums (10) zu der Ausnehmung (3) wenigstens der Breite der Ausnehmung (3) entspricht.

3. Positionsmarker (1) nach Anspruch 1 oder Anspruch 2, **dadurch gekennzeichnet, dass** zumindest ein Teil einer Innenfläche des durch die Ausnehmung (3) einsehbaren Hohlraums (10) lichtabsorbierend ausgestaltet ist.

4. Positionsmarker (1) nach einem der Ansprüche 1 bis 3, **dadurch gekennzeichnet, dass** eine Innenfläche des Hohlraums (10) als
(i) schwarze Fläche ausgestaltet ist, oder als
(ii) textile Fläche ausgestaltet ist, oder durch
(iii) schwarze Pyramiden, Kegel oder Stacheln, insbesondere bis zu Größe von ein 1-2 cm Kantenlänge, besetzt ist,
oder eine Kombination aus den Merkmalen (i), (ii), und (iii) aufweist.

5. Positionsmarker (1) nach einem der vorherigen Ansprüche, **dadurch gekennzeichnet, dass** die Markerwirkfläche (4) einen unter oder hinter der Markerwirkfläche (4) angeordneten Hohlraum (10) abschließt, und der Hohlraum (10) eine oder mehrere untere Öffnungen aufweist.

6. Positionsmarker (1) nach einem der vorherigen Ansprüche, **dadurch gekennzeichnet, dass** die Markerwirkfläche (4) in einer Ausnehmung (3) eine beleuchtete Teilfläche (2') aufweist.

7. Positionsmarker (1) nach einem der vorherigen Ansprüche, **dadurch gekennzeichnet, dass** die Markerwirkfläche (4) eine beleuchtete Teilfläche (2') in Form einer Plexiglasscheibe aufweist, welche seitlich oder von unten von einer Lichtquelle beleuchtet werden kann.

8. Positionsmarker (1) nach einem der vorherigen Ansprüche, **dadurch gekennzeichnet, dass** die Markerwirkfläche (4) eine beleuchtete Teilfläche (2') aufweist, deren Helligkeit adaptiv mittels eines Lichtsensors geregelt werden kann.

9. Positionsmarker (1) nach einem der vorherigen Ansprüche, **dadurch gekennzeichnet, dass** die Summe von reflektierenden oder lichtabgebenden Teilflächen (2) kleiner als die Summe von im Wesentlichen nichtreflektierenden oder lichtabsorbierenden Teilflächen (2) ausgeführt ist.

10. Roboterfahrzeug (5), welches auf einer Fläche (6) beweglich ist, und zum Empfang von Fernsteuerdaten von einem stationär angeordneten Kamerasystem mit wenigstens einer Kamera (7) eingerichtet ist, **dadurch gekennzeichnet,**
**dass** das Roboterfahrzeug (5) einen Positionsmarker (1) nach einem der Ansprüche 1 bis 9 zur Unterstützung einer Positionserfassung des Roboterfahrzeugs (5) auf der Fläche (6) aufweist.

11. Anordnung aus einem Roboterfahrzeug (5), welches zum Empfang von Fernsteuerdaten eingerichtet und auf einer Fläche (6) beweglich ist,
und einem stationär angeordneten Kamerasystem mit wenigstens einer Kamera (7), wobei die Kamera (7) in einer gegenüber dem Roboterfahrzeug (5) erhöhten Position angeordnet und eingerichtet ist, das Roboterfahrzeug (5) auf der Fläche (6) zu erfassen, und eingerichtet ist, die Position des Roboterfahrzeugs (5) zu erfassen und dem Roboterfahrzeug (5) zum Zweck einer Fernsteuerung Steuerungsdaten zu übermitteln,
**dadurch gekennzeichnet,**
**dass** das Roboterfahrzeug (5) einen Positionsmarker (1) nach einem der Anspruch 1 bis 9 aufweist, mit Hilfe dessen eine Positionserfassung des Roboterfahrzeugs (5) auf der Fläche (6) erzielbar ist.

12. Anordnung nach Anspruch 11, **dadurch gekennzeichnet, dass** Abstände von Innenflächen des Hohlraums (10) zu der Ausnehmung (3) abhängig von dem maximalen Erfassungswinkel der Kamera (7) und/oder dem maximalen Einfallswinkel einer Lichtquelle dimensioniert sind.

13. Anordnung nach Anspruch 11 oder Anspruch 12, **dadurch gekennzeichnet, dass** die Kamera (7) derart positioniert ist, dass eine Erfassungsrichtung der Kamera (7) einer Einfallsrichtung des Lichts entgegengerichtet ist.

## Claims

1. Position marker (1) for optical detection by an optical acquisition sensor, in particular a camera (7), comprising a two-dimensional marker effective surface (4) having partial surfaces (2) of different optical properties, wherein the marker effective surface (4) comprises one or more reflective or light emitting partial surfaces (2) and one or more essentially non-reflective or light absorbing partial surfaces (2),
wherein the position marker (1) comprises a three-dimensional extent and a partial surface (2) is configured in the form of a recess (3), **characterized in that** the marker effective surface (4) closes off a cavity (10), visible through the recess (3), disposed below or behind the marker effective surface (4).

2. Position marker(1) according to claim 1, **characterized in that** a distance from internal surfaces of the cavity (10) to the recess (3) corresponds to at least the width of the recess (3).

3. Position marker (1) according to claim 1 or claim 2, **characterized in that** at least a part of an internal surface of the cavity (10) visible through the recess (3) is designed to be light absorbing.

4. Position marker (1) according to one of claims 1 to 3, **characterized in that** an internal surface of the cavity (10)
(i) is designed as a black surface, or
(ii) is designed as a textile surface, or
(iii) is occupied by black pyramids, cones or spikes, in particular up to a size of a 1-2 cm edge length, or
comprises a combination of features (i), (ii), and (iii).

5. Position marker (1) according to one of the preceding claims, **characterized in that** the marker effective surface (4) closes off a cavity (10) disposed below or behind the marker effective surface (4), and that the cavity (10) comprises one or more lower openings.

6. Position marker (1) according to one of the preceding claims, **characterized in that** the marker effective surface (4) in a recess (3) comprises an illuminated partial surface (2').

7. Position marker (1) according to one of the preceding claims, **characterized in that** the marker effective surface (4) comprises an illuminated partial surface (2') in the form of a Plexiglas sheet, which can be illuminated from the side or from below by a light source.

8. Position marker (1) according to one of the preceding claims, **characterized in that** the marker effective surface (4) comprises an illuminated partial surface (2'), the brightness of which can be adaptively controlled via a light sensor.

9. Position marker (1) according to one of the preceding claims, **characterized in that** the sum of reflective or light emitting partial surfaces (2) is configured to be less than the sum of essentially non-reflective or light absorbing partial surfaces (2).

10. Robotic vehicle (5), which is moveable on a surface (6) and adapted to receive remote control data from a stationarily arranged camera system having at least one camera (7), **characterized in that**
the robotic vehicle (5) comprises a position marker (1) according to one of claims 1 to 9 to assist a position detection of the robotic vehicle (5) on the surface (6).

11. Assembly of a robotic vehicle (5) adapted to receive remote control data and moveable on a surface (6), and a stationarily arranged camera system having at least one camera (7), wherein the camera (7) is arranged in a raised position relative to the robotic vehicle (5) and is adapted to detect the robotic vehicle (5) on the surface (6), and is adapted to detect the position of the robotic vehicle (5) and to transmit control data to the robotic vehicle (5) for the purpose of a remote control,
**characterized in that**
the robotic vehicle (5) comprises a position marker (1) according to one of claim 1 to 9, with the aid of which a position detection of the robotic vehicle (5) on the surface (6) is achievable.

12. Assembly according to claim 11, **characterized in that** the distances from internal surfaces of the cavity (10) to the recess (3) are sized depending on the maximum detection angle of the camera (7) and/or the maximum incident angle of a light source.

13. Assembly according to claim 11 or claim 12, **characterized in that** the camera (7) is positioned such that a detection device of the camera (7) is opposed to an incident angle of the light.

## Revendications

1. Marqueur de position (1) destiné à la détection optique par un capteur optique de prise d'images, en particulier une caméra (7), qui comprend une surface active de marqueur bidimensionnelle (4) ayant des parties de surface (2) dotées de propriétés optiques différentes, la surface active de marqueur (4) présentant une ou plusieurs parties de surface (2) réfléchissantes ou émettant de la lumière et une ou plusieurs parties de surface (2) sensiblement non réfléchissantes ou absorbant la lumière,
le marqueur de position (1) présente une extension tridimensionnelle et une partie de surface (2) est réalisée sous la forme d'un creux (3), **caractérisé en ce que** la surface active de marqueur (4) ferme une cavité (10) disposée sous ou derrière la surface active de marqueur (4), laquelle peut être vu à travers le creux (3).

2. Marqueur de position (1) selon la revendication 1, **caractérisé en ce qu'**une distance entre les surfaces intérieures de la cavité (10) et le creux (3) correspond au moins à la largeur du creux (3).

3. Marqueur de position (1) selon la revendication 1 ou la revendication 2, **caractérisé en ce qu'**au moins une partie d'une surface intérieure de la cavité (10) visible à travers le creux (3) est conçue pour absorber la lumière.

4. Marqueur de position (1) selon l'une des revendications 1 à 3, **caractérisé en ce qu'**une surface intérieure de la cavité (10) est utilisée comme
(i) une surface noire, ou comme
(ii) une surface textile, ou par
(iii) des pyramides noires, des cônes ou des épines, en particulier jusqu'à une taille de 1-2 cm de longueur d'arête, ou une combinaison des caractéristiques (i), (ii) et (iii).

5. Marqueur de position (1) selon l'une des revendications précédentes, **caractérisé en ce que** la surface active de marqueur (4) ferme une cavité (10) disposée sous ou derrière la surface active de marqueur (4), et la cavité (10) présente une ou plusieurs ouvertures inférieures.

6. Marqueur de position (1) selon l'une des revendications précédentes, **caractérisé en ce que** la surface active de marqueur (4) présente une partie de surface éclairée (2') dans un creux (3).

7. Marqueur de position (1) selon l'une des revendications précédentes, **caractérisé en ce que** la surface active de marqueur (4) présente une partie de surface éclairée (2') sous la forme d'une vitre en plexiglas, qui peut être éclairée latéralement ou par le dessous par une source lumineuse.

8. Marqueur de position (1) selon l'une des revendications précédentes, **caractérisé en ce que** la surface active de marqueur (4) présente une partie de surface éclairée (2') dont la luminosité peut être réglée de manière adaptative au moyen d'un capteur de lumière.

9. Marqueur de position (1) selon l'une des revendications précédentes, **caractérisé en ce que** la somme des parties de surface (2) réfléchissantes ou émettant de la lumière est réalisée plus petite que la somme des parties de surface (2) sensiblement non réfléchissantes ou absorbant la lumière.

10. Véhicule robot (5), qui est mobile sur une surface (6), et qui est conçu pour recevoir des données de télécommande d'un système de caméras disposé de manière fixe avec au moins une caméra (7), **caractérisé en ce que** le véhicule robot (5) comporte un marqueur de position (1) selon l'une des revendications 1 à 9 pour assister une détection de position du véhicule robot (5) sur la surface (6).

11. Agencement constitué d'un véhicule robot (5) qui est conçu pour recevoir des données de télécommande et qui est mobile sur une surface (6), et d'un système de caméras disposé de manière stationnaire avec au moins une caméra (7), la caméra (7) étant disposée à une position surélevée par rapport au véhicule robot (5) et étant conçue pour détecter le véhicule robot (5) sur la surface (6), et étant conçue pour détecter la position du véhicule robot (5) et pour communiquer au véhicule robot (5) des données de commande aux fins d'une télécommande,
**caractérisé en ce que** le véhicule robot (5) comprend un marqueur de position (1) selon l'une des revendications 1 à 9, à l'aide duquel une détection de position du véhicule robot (5) peut être obtenue sur la surface (6).

12. Agencement selon la revendication 11, **caractérisé en ce que** les distances entre les surfaces intérieures de la cavité (10) et le creux (3) sont dimensionnées en fonction de l'angle de détection maximal de la caméra (7) et/ou de l'angle d'incidence maximal d'une source lumineuse.

13. Dispositif selon la revendication 11 ou la revendication 12, **caractérisé en ce que** la caméra (7) est positionnée de telle sorte qu'une direction de détection de la caméra (7) est opposée à une direction d'incidence de la lumière.
